# EUROPÄISCHE PATENTSCHRIFT

(11) **EP 4 025 412 B1**
(45) Veröffentlichungstag und Bekanntmachung des Hinweises auf die Patenterteilung: **28.02.2024**
(21) Anmeldenummer: 20768540.5
(22) Anmeldetag: 03.09.2020
(51) Int. Cl.: B29C 65/08, B32B 41/00, B32B 37/06, B32B 37/04

(54) **VORRICHTUNG UND VERFAHREN ZUR HERSTELLUNG EINES GERAFFTEN ODER RAFFBAREN MATERIALS**
DEVICE AND METHOD FOR PRODUCING A MATERIAL THAT IS RUFFLED OR ABLE TO BE RUFFLED
DISPOSITIF ET PROCÉDÉ POUR LA PRODUCTION D'UN MATÉRIAU QUI EST PLISSÉ OU SUSCEPTIBLE D'ÊTRE PLISSÉ

(30) Priorität: 06.09.2019 DE 102019124006
(43) Veröffentlichungstag der Anmeldung: 13.07.2022
(73) Patentinhaber: Herrmann Ultraschalltechnik GmbH & Co. KG, 76307 Karlsbad (DE)
(72) Erfinder: WEILER, Dave, Geneva, Illinois 60134 (US); ROUSSEL GARCIA, Raquel, 76180 Pforzheim (DE); ZINK, Timo, 76139 Karlsruhe (DE); PASTERNAK, Markus, 76307 Karlsbad (DE)
(74) Vertreter: WSL Patentanwälte Partnerschaft mbB
(86) Internationale Anmeldenummer: PCT/EP2020/074682
(87) Internationale Veröffentlichungsnummer: WO 2021/043943

(56) Entgegenhaltungen:
- EP-A2- 1 529 623
- US-A- 5 713 399
- US-A1- 2019 070 041

## Beschreibung

Die vorliegende Erfindung betrifft eine Vorrichtung und ein Verfahren zur Herstellung eines gerafften oder raffbaren Materials. Das geraffte oder raffbare Material besteht aus mindestens zwei Materialbahnabschnitten und zumindest einem Faden, der zwischen den Materialbahnabschnitten positioniert ist. Dabei sind die beiden Materialbahnabschnitte an zumindest zwei Verbindungsflächen miteinander verbunden und der Faden ist zwischen den Materialbahnabschnitten und zwischen den beiden Verbindungsflächen angeordnet mit der Folge, dass der Faden zwischen den Materialbahnabschnitten derart fixiert ist, dass eine formschlüssige Verbindung zwischen Faden und Materialbahnabschnitten in einer ersten und einer zweiten Richtung, die senkrecht zur ersten Richtung ausgerichtet ist, vorliegt.

In einer dritten Richtung, die senkrecht zu der ersten und der zweiten Richtung orientiert ist, kann eine relative Bewegbarkeit zwischen dem Faden und den Materialbahnabschnitten gegeben sein.

Die beiden Materialbahnabschnitte können durch zwei Materialbahnen, die über die Verbindungsflächen verbunden sind, verwirklicht werden. Es ist auch möglich, eine Materialbahn so zu falten, dass ein erster Materialbahnabschnitt dieser Materialbahn gegenüberliegend zu einem zweiten Materialbahnabschnitt zu liegen kommt und der Faden zwischen dem ersten und dem zweiten Materialbahnabschnitt angeordnet ist.

Die Vorrichtung weist weiterhin eine Sonotrode mit einer ersten Siegelfläche und ein Gegenwerkzeug mit einer zweiten Siegelfläche auf. Die Sonotrode ist dafür vorgesehen, mit einer Ultraschallschwingung angeregt zu werden, sodass durch einen Kontakt der mit der Ultraschallschwingung schwingenden ersten Siegelfläche und den Materialbahnen eine schweißende Bearbeitung erfolgt und die Verbindungsflächen dadurch ausgebildet werden, dass die Materialbahnabschnitte miteinander verschweißt werden.

Das Gegenwerkzeug ist zylinderförmig mit einer Mantelfläche und einer ersten Zylinderachse ausgebildet. Dabei ist die zweite Siegelfläche auf der Mantelfläche angeordnet und das Gegenwerkzeug ist um die Zylinderachse drehbar, wobei die Sonotrode und das Gegenwerkzeug in einer Bearbeitungsposition derart zueinander angeordnet sind, dass die Materialbahnabschnitte und der Faden durch einen von der ersten und der zweiten Siegelfläche gebildeten Spalt in einer tangential zur Mantelfläche des Gegenwerkzeuges verlaufenden Vorschubrichtung hindurchgeführt werden können. In der Regel erfolgt die Bewegung der Materialbahnabschnitte mit einer Geschwindigkeit, die der Umlaufgeschwindigkeit der Mantelfläche des Gegenwerkzeuges entspricht. Häufig wird der zwischen den Materialbahnabschnitten angeordnete zumindest eine Faden während der Erzeugung der Verbindungsflächen unter Zugspannung gesetzt, so dass sich sein Außenumfang reduziert und seine Länge vergrößert. Wird nach der Erzeugung der Verbindungsflächen die Zugspannung gelöst, dehnt sich der Außenumfang wieder aus.

Ein solches Werkzeug ist beispielsweise bekannt aus der US 10,259,165 B2.

Hier wird eine aufwendig strukturierte Walze als Gegenwerkzeug verwendet. Auf die Mantelfläche dieses Gegenwerkzeuges sind Rippen aufgebracht, deren Oberfläche wiederum Kerben aufweist, die quer zur Orientierung der Rippen angeordnet sind. Bei diesem Werkzeug besteht ein erheblicher Aufwand, die Fäden in die Vorrichtung einzufädeln. Darüber hinaus ist die Anfertigung des gravierten Gegenwerkzeuges sehr aufwendig. Bei einem Austausch des Fadens durch einen Faden eines anderen Materials oder durch Austausch gegen einen Faden gleichen Materials mit anderer Dicke, durch Austausch der verwendeten Materialkombination der Materialbahn und des Fadens sowie bei Änderung der Spannung, unter der ein Faden im Werkzeug während der Bearbeitung gehalten wird, muss die aufwendig gravierte Gegenwerkzeugwalze ersetzt werden.

Weitere Verfahren zu Herstellung eines mehrschichtigen, elastischen Materials, das beispielsweise in absorbierenden Hygieneprodukten zum Einsatz kommt, werden in der EP 1 529 623 A2 und der US 2019/070041 A1 beschrieben.

Ausgehend von dem beschriebenen Stand der Technik ist es daher Aufgabe der vorliegenden Erfindung, die beschriebenen Nachteile zu überwinden oder zumindest abzuschwächen.

Erfindungsgemäß wird diese Aufgabe dadurch gelöst, dass die Sonotrode zumindest eine Rille zur zumindest teilweisen Aufnahme des zumindest einen Fadens aufweist, die in Vorschubrichtung orientiert ist und die sich vorzugsweise über die gesamte erste Siegelfläche erstreckt, wobei die zweite Siegelfläche keine Rille zur teilweisen Aufnahme des zumindest einen Fadens aufweist. Um eine Beweglichkeit des Fadens in einer Richtung relativ zu den Materialbahnabschnitten zuzulassen, ist es notwendig, dass der Faden nicht mit den Materialbahnabschnitten verschweißt wird. Daher wird der Faden innerhalb der Rille geführt, während die Siegelflächenanteile, welche die Rille begrenzen, die Verbindungsflächen herstellen, indem die Materialbahnabschnitte zwischen der ersten und der zweiten Siegelfläche geführt und bearbeitet werden. Dabei liegen die Materialbahnabschnitte zum Teil ebenfalls in der Rille.

Auch wenn ein Vorteil bereits erzielt wird, wenn der Faden nur teilweise in der Rille aufgenommen wird, ist es jedoch bevorzugt, wenn der Faden während der Bearbeitung mit Ultraschall vollständig in der Rille aufgenommen ist.

In einer weiteren bevorzugten Ausführungsform ist vorgesehen, dass die Sonotrode eine Mehrzahl von Rillen zur zumindest teilweisen Aufnahme des zumindest einen Fadens aufweist, die in Vorschubrichtung orientiert sind, wobei vorzugsweise die Rillen einen Abstand zwischen 0,1 und 100mm und besonders bevorzugt zwischen 0,5 und 2,5 mm voneinander haben. In bevorzugten Ausführungsformen sind mehr als 15 oder sogar mehr als 50 Rillen vorgesehen.

Es ist auch möglich, sehr dünne Fäden zu verwenden. Falls die Sonotrode auch zur Herstellung von gerafftem Material mit sehr dünnen Fäden geeignet sein soll, kann der Abstand zwischen den Rillen sogar noch geringer gewählt werden. Beispielsweise kann der Abstand kleiner als 0,2mm und am besten zwischen 0,01mm und 0,15mm liegen.

Es hat sich gezeigt, dass ein raffbares Material leichter zu raffen ist, wenn mehrere Fäden mit den Materialbahnabschnitten in der beschriebenen Art und Weise verbunden sind. Daher weist die Sonotrode eine Mehrzahl von Rillen auf, wobei jede Rille dafür vorgesehen ist, zumindest einen Faden während der Bearbeitung aufzunehmen. Die Fäden sollten keinen zu großen Abstand voneinander haben. Es ist auch möglich, deutlich mehr Rillen zur Verfügung zu stellen als Fäden verarbeitet werden.

In einer weiteren bevorzugten Ausführungsform ist vorgesehen, dass die zumindest eine Rille eine Tiefe zwischen 0,02 und 1 mm hat. Die Tiefe der Rille ist so zu bemessen, dass der verwendete Faden zumindest teilweise in die Rille eingreifen kann. Dabei kann es notwendig sein, den Faden während der Bearbeitung mit einer Zugspannung zu beaufschlagen, um den Fadendurchmesser zu reduzieren. Es hat sich gezeigt, dass die genannten Rillentiefen in manchen Fällen die besten Ergebnisse erzielen.

In einer weiteren bevorzugten Ausführungsform ist vorgesehen, dass die zumindest eine Rille eine Breite zwischen 0,02 und 1 mm hat.

In einer weiteren bevorzugten Ausführungsform ist der Abstand zwischen benachbarten Rillen kleiner als die Breite der Rillen.

Weiterhin ist es von Vorteil, wenn die zumindest eine Rille einen halbkreisförmigen Querschnitt, einen U-förmigen Querschnitt oder einen V-förmigen Querschnitt aufweist.

Im Falle eines U-förmigen Querschnittes ist es von Vorteil, wenn die Flanken der Rille nach außen geneigt sind. Ein Flankenwinkel zwischen 0° und 30° oder besser zwischen 0° und 20° ist besonders bevorzugt.

In einer weiteren bevorzugten Ausführungsform ist vorgesehen, dass die erste Siegelfläche im Wesentlichen eben ausgebildet ist. So kann beispielsweise eine stehende Sonotrode verwendet werden, die allenfalls zum Einfädeln der Materialbahnabschnitten und der Fäden von der zweiten Siegelfläche wegbewegt wird.

Es ist aber auch möglich, dass die erste Siegelfläche einen Schweißabschnitt, der im Wesentlichen eben ausgebildet ist, und einen neben dem Schweißabschnitt angeordneten Einlaufabschnitt aufweist, wobei der Einlaufabschnitt konvex gekrümmt ist, wobei vorzugsweise der Krümmungsradius des konvex gekrümmten Einlaufabschnitt größer als 1 mm, besonders bevorzugt größer als 5mm und am besten zwischen 6 mm und 15mm beträgt. Dabei kann die Rille sowohl Im Schweißabschnitt als auch im Einlaufabschnitt angeordnet sein. In diesem Fall sollte der zumindest eine Faden so zugeführt werden, dass er sowohl an dem Einlaufabschnitt als auch an dem Schweißabschnitt anliegt. Dadurch kann der zumindest eine Faden sicher in der Rille gehalten werden, ohne dass die Gefahr besteht, dass der Faden während der Bearbeitung die Rille verläßt.

Alternativ kann auch die Sonotrode zylinderförmig mit einer Mantelfläche und einer zweiten Zylinderachse ausgebildet sein, wobei die erste Siegelfläche auf der Mantelfläche angeordnet ist und um die zweite Zylinderachse drehbar ist, wobei vorzugsweise die zumindest eine Rille die Mantelfläche der Sonotrode kreisförmig umläuft.

Mit anderen Worten sind bei dieser Ausführungsform sowohl Sonotrode als auch Gegenwerkzeug walzenförmig ausgebildet und rollen aufeinander ab, wobei die Materialbahnabschnitten und der zumindest eine Faden zwischen den beiden Mantelflächen hindurchgeführt werden.

In einer weiteren bevorzugten Ausführungsform ist vorgesehen, dass das Gegenwerkzeug zumindest eine Rippe aufweist, die zumindest einen Abschnitt aufweist, der nicht in Umfangsrichtung orientiert ist.

Die Rippen dienen dabei dazu, die Verbindungsabschnitte herzustellen. Dabei wird durch die Rippe eine Schweißnaht erzeugt, die dort unterbrochen ist, wo sich die Rille auf der Sonotrode befindet, da an dieser Stelle von der Sonotrode keine Schweißkraft auf die Materialbahnabschnitten übertragen wird.

Die Rippe kann beispielsweise zickzackförmig oder wellenförmig ausgebildet sein.

Es ist auch möglich, die zumindest eine Rippe linear auszubilden, wobei die Rippe nicht parallel zur ersten Zylinderachse orientiert sein muss.

Die speziellen Formen von Rippen haben eine bessere Kraftverteilung zur Folge.

Erfindungsgemäß ist vorgesehen, dass die zweite Siegelfläche keine Rille zur teilweisen Aufnahme des zumindest einen Fadens aufweist, um sicherzustellen, dass der Faden vollständig in der Rille der ersten Siegelfläche aufgenommen wird.

In einer alternativen Ausführungsform, die nicht unter die vorliegende Erfindung fällt, ist vorgesehen, dass die zweite Siegelfläche zumindest eine Rille zur teilweisen Aufnahme des zumindest einen Fadens aufweist, die in Vorschubrichtung orientiert ist und vorzugsweise die Mantelfläche des zweiten Werkzeuges vollständig umläuft, wobei in der Bearbeitungsposition die zumindest eine Rille in der ersten Siegelfläche der zumindest einen Rille in der zweiten Siegelfläche gegenüberliegend angeordnet ist, sodass der zumindest eine Faden gleichzeitig sowohl in der zumindest einen Rille in der ersten Siegelfläche als auch in der zumindest einen Rille in der zweiten Siegelfläche aufgenommen werden kann.

Durch diese Maßnahmen können auch Materialbahnabschnitte mit Fäden mit größeren Durchmessern verbunden werden.

In einer besonders bevorzugten Ausführungsform weist die Sonotrode zumindest abschnittsweise eine Beschichtung auf und die zumindest eine Rille ist in der Beschichtung angeordnet. Die Beschichtung kann beispielsweise aus Hartmetall und besonders bevorzugt aus Wolframcarbid bestehen. Dadurch dass die Rille in der Beschichtung angeordnet ist, kann, wenn die von dem zumindest einen Faden hervorgerufene Abrasion an der Sonotrode ein hinnehmbares Maß überschritten hat, lediglich die Beschichtung ersetzt werden, während die Sonotrode selbst weiterverwendet werden kann. Gleiches gilt auch, wenn aus irgendwelchen Gründen die Anordnung und die Geometrie der Rillen verändert werden soll. Die zumindest eine Rille kann beispielsweise durch Erodieren oder Schleifen in die Beschichtung eingebracht werden.

Die vorliegende Erfindung betrifft auch ein Verfahren zur Herstellung eines gerafften oder raffbaren Materials, wobei das Material aus zwei Materialbahnabschnitten und zumindest einem Faden besteht, wobei die Materialbahnabschnitte an zumindest zwei Verbindungsflächen miteinander verbunden sind und der Faden zwischen den Materialbahnabschnitten und zwischen den Verbindungsflächen positioniert ist, sodass eine formschlüssige Verbindung zwischen Faden und Materialbahnabschnitten in einer ersten und in einer zweiten Richtung vorliegt, wobei die erste und die zweite Richtung senkrecht zueinander ausgerichtet sind.

Erfindungsgemäß ist nun vorgesehen, eine Vorrichtung der eingangs genannten Art zu verwenden und die beiden Materialbahnabschnitte zusammen mit dem zumindest einen Faden in der Vorschubrichtung durch den Spalt zu führen, während die Sonotrode in eine Ultraschallschwingung versetzt wird, wobei der Faden durch die zumindest eine Rille geführt wird.

Dabei ist es möglich, einen elastischen Faden zu verwenden. Der zumindest eine elastische Faden wird dann während der Bearbeitung unter Zugspannung gesetzt. So kann der Durchmesser des unbelasteten, elastischen Fadens größer als der Durchmesser der Rille sein. Durch das Unter-Zugspannung-Setzen des elastischen Fadens wird der Durchmesser des elastischen Fadens so weit reduziert, dass der Faden in die bereitgestellten Rillen passt. Nach der Bearbeitung kann die Zugspannung wieder gelöst werden, sodass sich der Durchmesser des Fadens wieder vergrößert und es zu einer klemmenden Halterung des Fadens zwischen den Materialbahnabschnitten kommt. Zwar ist es nach wie vor möglich, die Materialbahnabschnitten relativ zu dem Faden zu verschieben, es ist jedoch notwendig, eine entsprechende Reibungskraft zu überwinden und eventuell den Faden unter Zugspannung zu versetzen, sodass bei der normalen Verwendung des Materials eine Relativbewegung zwischen Faden und Materialbahn kaum erfolgt.

Außerdem ist es möglich, eine Sonotrode mit einer Anzahl von Rillen zu verwenden, die größer als die Anzahl von Fäden ist, die zwischen den Materialbahnabschnitten und zwischen den Verbindungsflächen positioniert sind. Es ist dann auch nicht eindeutig vorbestimmt, in welcher Rille welcher Faden aufgenommen wird. Stattdessen wird sich jeder Faden von selbst in eine Rille legen, die seiner Position am nächsten kommt.

Weitere Vorteile, Möglichkeiten und Anwendungsmöglichkeiten werden deutlich anhand der folgenden Beschreibung bevorzugter Ausführungsformen und der zugehörigen Figuren.

Es zeigen:

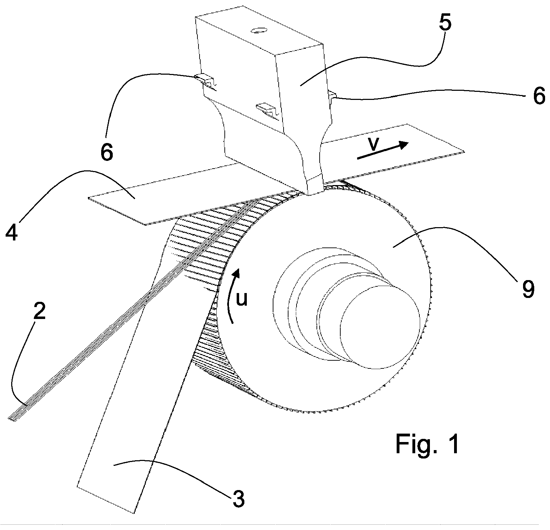

- Figur 1: eine Seitenansicht auf eine erste erfindungsgemäße Ausführungsform der Vorrichtung,
- Figur 2: eine Draufsicht auf die erste Siegelfläche der Sonotrode der Ausführungsform von Figur 1,
- Figur 3: eine perspektivische Ansicht der Sonotrode von Figur 1,
- Figur 4: eine perspektivische Ansicht auf das Gegenwerkzeug der Ausführungsform von Figur 1
- Figuren 5a-5c: Teilschnittansichten von Rillenprofilen verschiedener Ausführungsformen,
- Figuren 6a-8a: schematische Ansichten der Rippenanordnung von verschiedenen Ausführungsformen,
- Figuren 6b-8b: schematische Darstellungen der Anordnung der Verbindungsflächen bei Verwendung der Rippenanordnungen der Figuren 6a-8a,
- Figur 9: eine perspektivische Ansicht auf eine zweite Ausführungsform der erfindungsgemäßen Sonotrode,
- Figur 9a: eine Detailvergrößerung von Figur 9,
- Figur 10: eine Seitenansicht der Sonotrode von Figur 9,
- Figur 11: eine Teilansicht einer Draufsicht auf die Siegelfläche der Sonotrode von Figur 9 und
- Figur 12: eine Teischnittansicht durch die Siegelfläche der Sonotrode von Figur 9.

Die Vorrichtung 1 weist eine Sonotrode 5 und ein Gegenwerkzeug 9 auf. Das Gegenwerkzeug 9 ist zylinderförmig und um eine Zylinderachse drehbar, sodass die Mantelfläche der zylindrischen Walze 9 sich in der Richtung u drehen kann.

Das Gegenwerkzeug weist auf seiner Mantelfläche eine Siegelfläche auf. Die Sonotrode 5 weist ebenso eine Siegelfläche auf, die derart angeordnet ist, dass die erste Siegelfläche der Sonotrode 5 der zweiten Siegelfläche des Gegenwerkzeuges 9 zugewandt ist. Zwischen den beiden Siegelflächen verbleibt ein Spalt, durch den zwei Materialbahnabschnitte 3, 4 und ein zwischen den beiden Materialbahnabschnitten 3, 4 angeordneter Faden oder eine Gruppe von Fäden 2 in einer Vorschubrichtung v hindurchbewegt werden. Da die Sonotrode 5 mit einer Ultraschallschwingung beaufschlagt wird, kommt es in dem Spalt zwischen Sonotrode 5 und Gegenwerkzeug 9 zu einer schweißenden Bearbeitung und die beiden Materialbahnabschnitte 3, 4 werden miteinander verschweißt.

Die Sonotrode 5 weist Halterungen 6 auf, die dem möglichst schwingungsentkoppelten Halten der Sonotrode dienen.

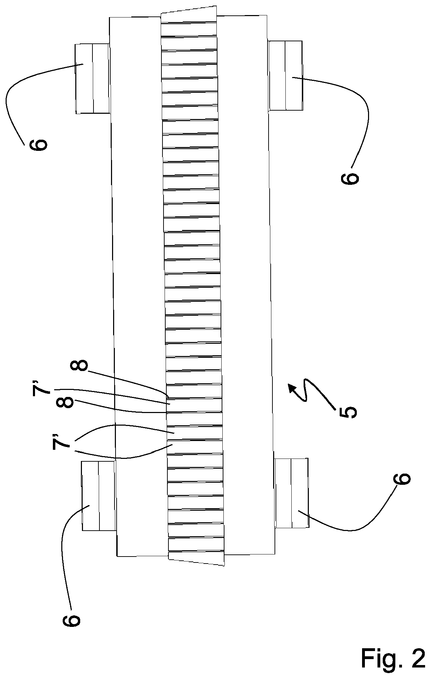

In Figur 2 ist eine Draufsicht auf die erste Siegelfläche 7 der Sonotrode 5 gezeigt. Es ist zu erkennen, dass die Siegelfläche 7 im Wesentlichen eben und rechteckförmig ist. Dies muss jedoch nicht unbedingt so sein. In die Siegelfläche 7 sind eine Reihe von Rillen 8 eingebracht worden. Diese Rillen sind derart angeordnet, dass sie in Richtung der Vorschubrichtung v ausgerichtet sind.

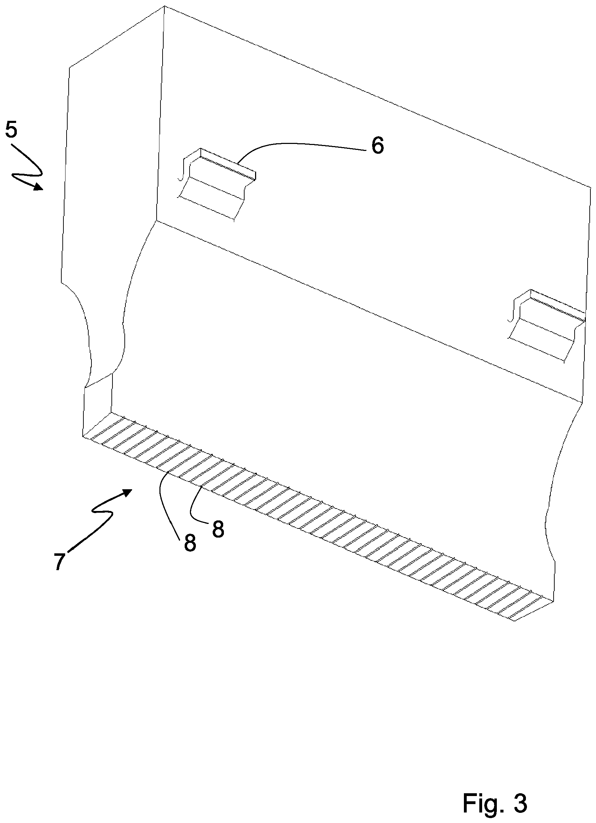

Figur 3 zeigt eine perspektivische Ansicht der Sonotrode 5 mit der Siegelfläche 7. Man erkennt die V-förmigen Rillen 8, die in die Siegelfläche 7 eingebracht worden sind.

Die Rillen 8 sind derart dimensioniert, dass der Faden 2 zumindest teilweise in den Rillen 8 aufgenommen werden kann. Da es bei der schweißenden Bearbeitung, die zwischen den beiden Siegelflächen stattfindet, auf einen entsprechenden Kontakt zwischen der Siegelfläche und der Materialbahn ankommt, kommt es im Bereich der Rillen 8 zu keiner Verschweißung. Dies hat zur Folge, dass der Faden 2 oder die Fäden 2 zwischen den Materialbahnabschnitten in Längsrichtung, d.h. in der Richtung, in welcher die Rillen 8 orientiert sind, relativ zu den Materialbahnabschnitten bewegt werden kann bzw. können, um das von den beiden Materialbahnabschnitten gebildete Material zu raffen.

Zwischen benachbarten Rillen 8 werden Inseln 7` gebildet, sodass die erste Siegelfläche 7 der Sonotrode 5 aus einer Vielzahl von benachbarten Inseln 7' besteht. Jede Insel 7' stellt bei der schweißenden Bearbeitung eine Verbindungsfläche zwischen den beiden Materialbahnabschnitten her, wenn sie auf ein entsprechendes Gegenelement auf der Siegelfläche des Gegenwerkzeuges stößt.

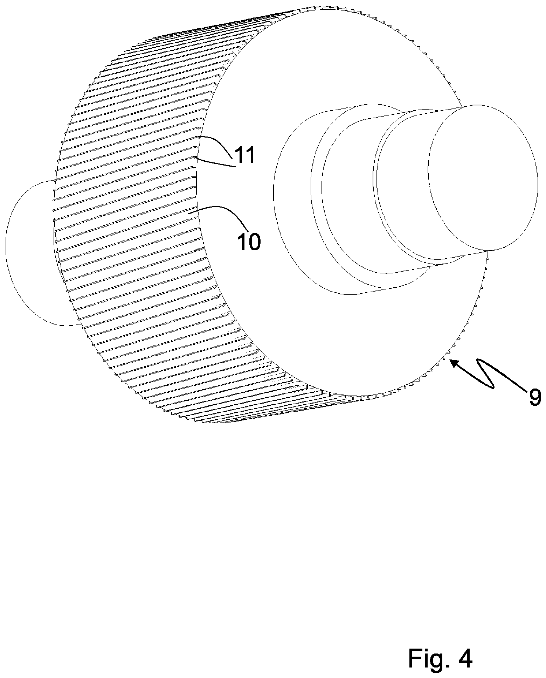

In Figur 4 ist eine perspektivische Teilansicht auf das Gegenwerkzeug 9 gezeigt. Das Gegenwerkzeug 9 ist walzenförmig, d.h. es hat eine zylindrische Mantelfläche. Diese Mantelfläche bildet die zweite Siegelfläche 10. Auf der zweiten Siegelfläche 10 sind eine Vielzahl von Stegen 11 aufgebracht, die sich quer zur Umfangsrichtung der Siegelfläche 10 über die gesamte Breite der Siegelfläche 10 erstrecken. Diese Stege 11 dienen als Gegenelement für die Inseln 7`.

Die Stege 11 sind in einem kleinen Winkel zur Zylinderachse angeordnet. Dadurch wird die Kraft, die von der Sonotrode 5 auf die Materialbahnabschnitten 3, 4 aufgebracht wird, gleichmäßiger.

Zu einer Verschweißung der beiden Materialbahnabschnitten 3, 4 kommt es immer dann, wenn eine Insel 7' mit einer Rippe 11 bzw. einem Abschnitt der Rippe 11 in Gegenüberstellung kommt. Der zwischen der Insel 7' und der Rippe 11 verbleibende Abstand ist so gering, dass die beiden Materialbahnabschnitten 3, 4 aufeinandergedrückt und aufgrund der Ultraschallschwingung der Sonotrode 5 miteinander verschweißt werden.

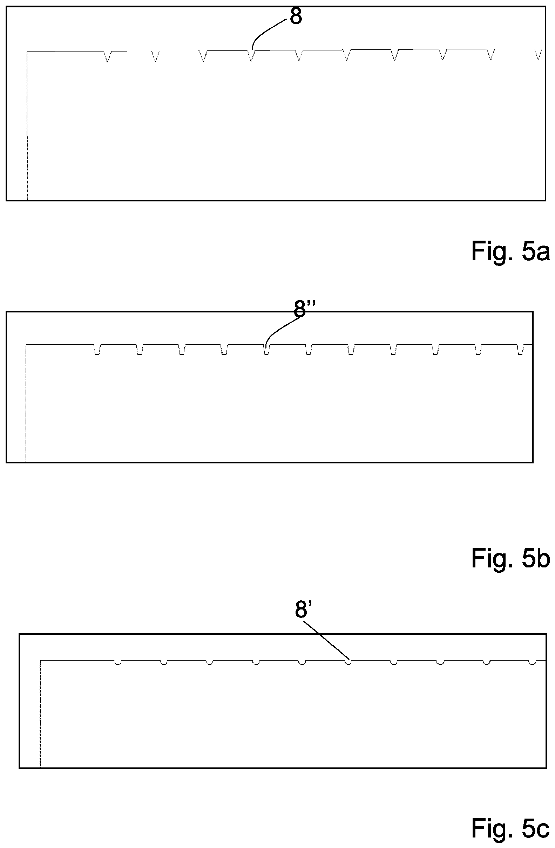

In den Figuren 5a bis 5c sind drei verschiedene Ausführungsformen der Sonotrode gezeigt. Dargestellt sind jeweils nur Teilquerschnittsansichten, in welchen die Form der Rillen 8 ,8`, 8" dargestellt ist. In Figur 5a ist eine V-förmige Rille 8 zu erkennen. Die Rille 8, 8', 8" kann jedoch auch, wie in Figur 5b dargestellt ist, U-förmig ausgebildet sein. Diese U-Form ist mit der Bezugszahl 8' bezeichnet worden. Diese U-Form besteht aus einem U-Grund und zwei U-Flanken, die nicht im rechten Winkel zu dem U-Grund angeordnet sind, sondern um einen Flankenwinkel zwischen 0° und 30° nach außen geneigt sind, um die Aufnahme des Fadens 2 zu erleichtern.

Alternativ kann, wie in Figur 5c dargestellt ist, die Rille auch als halbkreisförmige bzw. halbellipsenförmige Rille 8" ausgebildet sein.

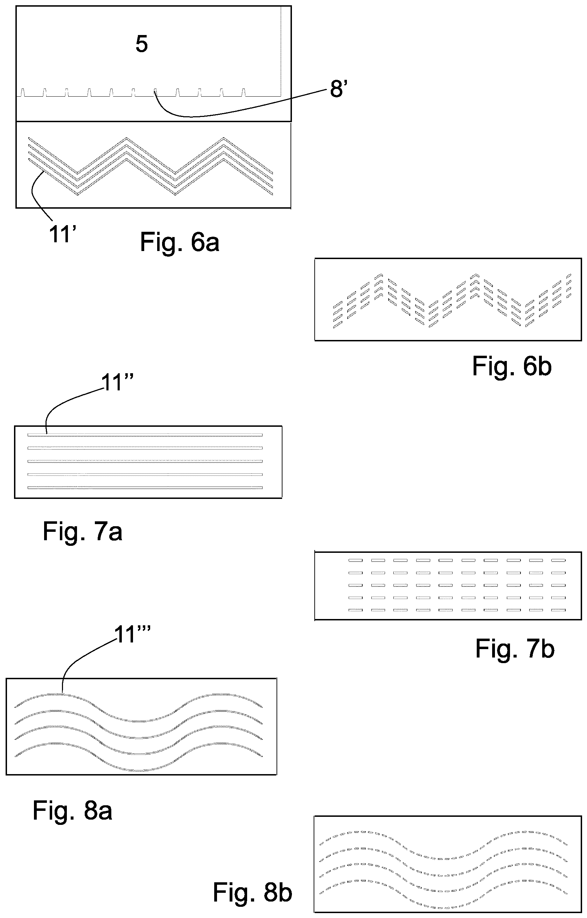

In Figur 6a ist schematisch die Sonotrode 5 im Teilquerschnitt mit den Rillen 8' gezeigt. Gegenüberliegend zu der Sonotrode 5 befindet sich das Gegenwerkzeug 9. Die auf dem Gegenwerkzeug 9 aufgebrachten Rippen sind in Figur 6a als zickzackförmige Rippen 11' dargestellt. Immer dann, wenn eine sich zwischen den Rillen 8' befindlicher Insel 7` der Sonotrode 5 mit der Rippe 11' in Gegenüberstellung befindet, kommt es zu einer Verschweißung der beiden Materialbahnabschnitte 3, 4. Das entsprechende Schweißresultat ist in Figur 6b dargestellt. Die entsprechenden Verbindungsflächen 12 folgen der Kontur der Rippe 11', die jedoch immer dann unterbrochen ist, wenn die Sonotrode eine entsprechende Rille 8' aufweist.

Die Unterbrechungen dienen der Aufnahme des Fadens 2.

In Figur 7a ist eine weitere alternative Anordnung der Rippen auf dem Gegenwerkzeug 9 dargestellt. Die Rippen 11" sind hier parallel zu der Zylinderachse ausgeführt, sodass sich die in Figur 7b gezeigte Anordnung der Verbindungsflächen 12 ergibt.

Schließlich ist in Figur 8a eine weitere Ausbildung der Rippen 11‴ gezeigt, die hier wellenförmig ausgebildet sind. Dies hat zur Folge, wie in Figur 8b dargestellt ist, dass auch die entsprechenden Verbindungsflächen 12 einer Wellenstruktur folgen. Sowohl die Sonotrode 5 als auch das Gegenwerkzeug 9 können einfach hergestellt werden.

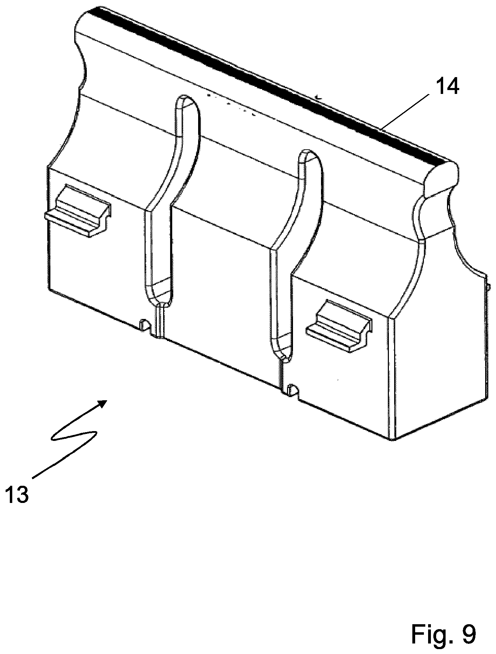

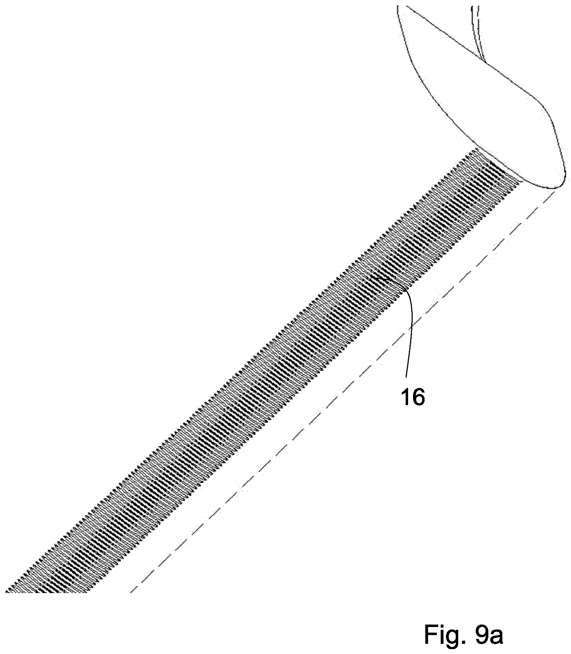

In den Figuren 9-12 sind Ansichten einer zweiten Ausführungsform der Erfindung gezeigt.

In Figur 9 ist eine perspektivische Ansicht einer Sonotrode 13 gezeigt. Die Sonotrode 13 hat ein keilförmiges Ende, welches in Richtung einer Siegelfläche 14 spitz zuläuft. Im Unterschied zu der ersten Ausfürhrungsform, die in Figur 3 dargestellt hat, weist die Siegelfläche 14 hier weit mehr Rillen 16 auf, wie insbesondere in der Detailvergrößerung von Figur 9a zu erkennen ist. Die Rillenanzahl ist derart groß, dass nicht in jeder Rille ein Faden aufgenommen wird. Diese Sonotrode kann daher auch zur Herstellung von Materialien mit unterschiedlicher Fadenanzahl mit unterschiedlichen Fadenabständen verwendet werden.

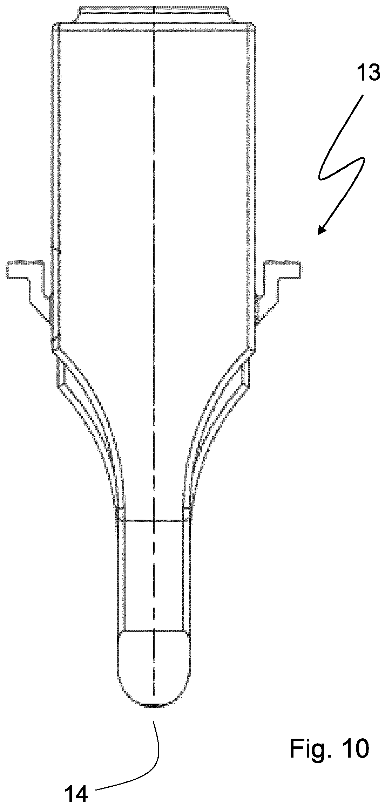

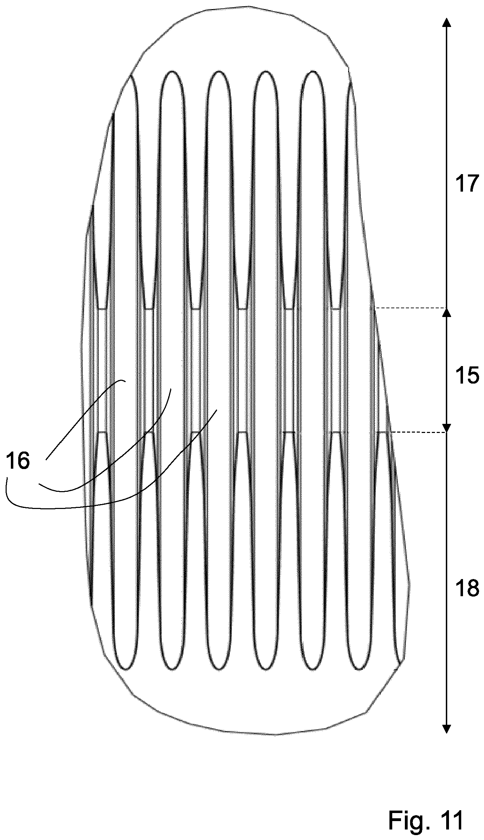

In Figur 10 ist eine Seitenansicht dieser Sonotrode 13 gezeigt. Die Siegelfläche 14 weist einen nahezu halbkreisförmigen Querschnitt auf. Tatsächlich weist die Siegelfläche 14 jedoch, wie in der Detaildraufsicht von Figur 11 zu erkennen ist, einen Schweißabschnitt 15 auf, welcher eben ausgebildet ist. An diesen Schweißabschnitt 15 schließt sich ein Einlaufabschnitt 17 sowie ein Auslaufabschnitt 18 an, die konvex gekrümmt sind und zwar mit einem Krümmungsradius von 7,5 mm.

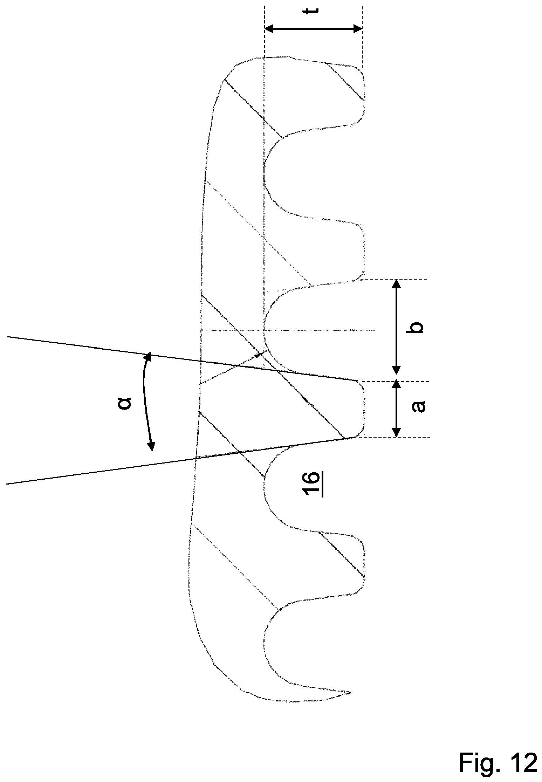

In die Siegelfläche 14 sind eine Vielzahl parallel zueinander angeordnete Rillen eingebracht. Der Rillenquerschnitt ist in Figur 12 dargestellt. Die Rillen selbst sind U-förmig ausgebildet, wobei die Flanken benachbarter Rillen einen Flankenwinkel α von 14° einschließen. Der Abstand a zwischen benachbarten Rillen ist kleiner als die Breite b der Rillen. Die Rillen verlaufen über den Schweißabschnitt 15 bis in den Einlaufabschnitt 17 und den Auslaufabschnitt 18 hinein. Aufgrund der konvexen Krümmung des Einlauf- und des Auslaufabschnittes 17, 18 nimmt die Rillentiefe im Einlaufabschnitt 17 und im Auslaufabschnitt sukzessive ab, je weiter die Rille von dem Schweißabschnitt entfernt ist.

### Bezugszeichenliste

- 1: Vorrichtung
- 2: Faden
- 3: Materialbahnabschnitt
- 4: Materialbahnabschnitt
- 5: Sonotrode
- 6: Halterungen
- 7: erste Siegelfläche
- 7`: Insel
- 8, 8`, 8",: Rillen
- 9: Gegenwerkzeug
- 10: zweite Siegelfläche
- 11, 11', 11", 11‴: Stege / Rippen
- 12: Verbindungsflächen
- 13: Sonotrode
- 14: erste Siegelfläche
- 15: Siegelabschnitt
- 16: Rille
- 17: Einlaufabschnitt
- 18: Auslaufabschnitt

## Patentansprüche

1. Vorrichtung (1) zur Herstellung eines gerafften oder raffbaren Materials, wobei das Material aus mindestens zwei Materialbahnabschnitten (3,4) und zumindest einem Faden (2), der zwischen den Materialbahnabschnitten (3,4) positioniert ist, besteht,
wobei die beiden Materialbahnabschnitten (3,4) an zumindest zwei Verbindungsflächen miteinander verbunden sind, wobei der Faden (2) zwischen den beiden Verbindungsflächen angeordnet ist, so dass der Faden (2) mit den Materialbahnabschnitten (3,4) derart verbunden ist, dass eine formschlüssige Verbindung zwischen Faden (2) und Materialbahnabschnitten (3,4) in einer ersten und einer zweiten Richtung vorliegt, wobei die beiden Richtungen senkrecht zueinander ausgerichtet sind,
wobei die Vorrichtung (1) eine Sonotrode (5) mit einer ersten Siegelfläche (7) und ein Gegenwerkzeug (9) mit einer zweiten Siegelfläche (10) aufweist,
wobei das Gegenwerkzeug (9) zylinderförmig mit einer Mantelfläche und einer ersten Zylinderachse ist, die zweite Siegelfläche (10) auf der Mantelfläche angeordnet ist und um die Zylinderachse drehbar ist, wobei die Sonotrode (5) und das Gegenwerkzeug (9) in einer Bearbeitungsposition derart zueinander angeordnet sind, dass die Materialbahnabschnitte (3,4) und der Faden (2) durch einen von der ersten (7) und der zweiten (10) Siegelfläche gebildeten Spalt in einer tangential zur Mantelfläche des Gegenwerkzeuges (9) verlaufenden Vorschubrichtung hindurchgeführt werden können,
wobei die Sonotrode (5) zumindest eine Rille (8, 8', 8") zur zumindest teilweisen Aufnahme des zumindest einen Fadens (2) aufweist, die in Vorschubrichtung orientiert ist und die sich vorzugsweise über die gesamte erste Siegelfläche (7) erstreckt, **dadurch gekennzeichnet, dass** die zweite Siegelfläche (10) keine Rille zur teilweisen Aufnahme des zumindest einen Fadens (2) aufweist.

2. Vorrichtung (1) nach Anspruch 2, **dadurch gekennzeichnet, dass** die Sonotrode (5) eine Mehrzahl von Rillen (8, 8', 8") und zwar vorzugsweise mehr als 15 Rillen (8, 8', 8") und besonders bevorzugt mehr als 50 Rillen (8, 8', 8") zur zumindest teilweisen Aufnahme des zumindest einen Fadens (2) aufweist, die in Vorschubrichtung orientiert sind, wobei vorzugsweise die Rillen (8, 8', 8") eine Abstand kleiner als 0,2mm und am besten zwischen 0,01mm und 0,15mm voneinander haben.

3. Vorrichtung (1) nach Anspruch 1 oder 2, **dadurch gekennzeichnet, dass** die zumindest eine Rille (8, 8', 8") eine Tiefe zwischen 0,02 und 1 mm und vorzugsweise zwischen 0,1 und 0,5 mm hat.

4. Vorrichtung (1) nach einem der Ansprüche 1 bis 3, **dadurch gekennzeichnet, dass** die zumindest eine Rille (8, 8', 8") eine Breite zwischen 0,02 und 1 mm und vorzugsweise zwischen 0,1 und 0,4 mm hat, wobei vorzugsweise der Abstand zwischen benachbarten Rillen (8, 8', 8") kleiner als die Breite der Rille (8, 8', 8") ist.

5. Vorrichtung (1) nach einem der Ansprüche 1 bis 4, **dadurch gekennzeichnet, dass** die zumindest eine Rille (8, 8', 8") einen halbkreisförmigen Querschnitt, einen U-förmigen Querschnitt oder einen V-förmigen Querschnitt aufweist.

6. Vorrichtung (1) nach einem der Ansprüche 1 bis 5, **dadurch gekennzeichnet, dass** die erste Siegelfläche (7) einen Schweißabschnitt (15), der im Wesentlichen eben ausgebildet ist, und einen neben dem Schweißabschnitt (15) angeordneten Einlaufabschnitt (17) aufweist, wobei der Einlaufabschnitt (17) konvex gekrümmt ist, wobei vorzugsweise der Krümmungsradius des konvex gekrümmten Einlaufabschnitt (17) größer als 1 mm, besonders bevorzugt größer als 5mm und am besten zwischen 6 mm und 15mm beträgt.

7. Vorrichtung (1) nach Anspruch 6, **dadurch gekennzeichnet, dass** die Rille (8, 8', 8") sowohl im Schweißabschnitt (15) als auch im Einlaufabschnitt (17) angeordnet ist.

8. Vorrichtung (1) nach einem der Ansprüche 1 bis 7, **dadurch gekennzeichnet, dass** das Gegenwerkzeug (9) zumindest eine Rippe (11, 11', 11", 11‴) aufweist, die zumindest einen Abschnitt aufweist, der nicht in Umfangsrichtung orientiert ist, wobei vorzugsweise die zumindest eine Rippe (11, 11', 11", 11‴) sich über die gesamte Breite der zweiten Siegelfläche (10) erstreckt.

9. Vorrichtung (1) nach Anspruch 8, **dadurch gekennzeichnet, dass** die zumindest eine Rippe (11, 11', 11", 11‴) zickzackförmig oder wellenförmig ist oder linear ausgebildet ist und zwar derart, dass die Rippe (11, 11', 11", 11‴) nicht parallel zur ersten Zylinderachse orientiert ist.

10. Vorrichtung (1) nach einem der Ansprüche 1 bis 9, **dadurch gekennzeichnet, dass** die Sonotrode (5) zumindest abschnittsweise eine Beschichtung aufweist und die zumindest eine Rille (8, 8', 8") in der Beschichtung angeordnet ist, wobei vorzugweise die Beschichtung aus Hartmetall und besonders bevorzugt aus Wolframcarbid besteht.

11. Verfahren zur Herstellung eines gerafften oder raffbaren Materials, wobei das Material aus zwei Materialbahnabschnitten (3,4) und zumindest einem Faden (2) besteht, wobei die Materialbahnabschnitte (3,4) an zumindest zwei Verbindungsflächen miteinander verbunden sind und der Faden (2) zwischen den Materialbahnabschnitten (3,4) und zwischen den Verbindungsflächen positioniert ist, so dass eine formschlüssige Verbindung zwischen Faden (2) und Materialbahnabschnitten (3,4) in einer ersten und einer zweiten Richtung vorliegt, während eine Relativbewegung zwischen Faden (2) und Materialbahn in einer dritten Richtung möglich ist,
wobei alle drei Richtungen senkrecht zueinander ausgerichtet sind,
**dadurch gekennzeichnet, dass** eine Vorrichtung (1) nach einem der Ansprüche 1 bis 10 verwendet wird und die beiden Materialbahnabschnitten (3,4) zusammen mit dem zumindest einen Faden (2) in der Vorschubrichtung durch den Spalt geführt wird, während die Sonotrode (5) in eine Ultraschallschwingung versetzt wird, wobei der Faden (2) durch die zumindest eine Rille (8, 8', 8") geführt wird.

12. Verfahren nach Anspruch 11, **dadurch gekennzeichnet, dass** zumindest ein elastischer Faden (2) verwendet wird, wobei der zumindest eine elastische Faden (2) während der Bearbeitung unter Zugspannung gesetzt wird.

13. Verfahren nach Anspruch 11 oder 12, **dadurch gekennzeichnet, dass** eine Sonotrode (5) mit einer Anzahl von Rillen (8, 8', 8") verwendet wird, die größer als die Anzahl von Fäden (2) ist, die zwischen den Materialbahnabschnitten (3,4) und zwischen den Verbindungsflächen positioniert sind.

## Claims

1. Apparatus (1) for producing a gathered or gatherable material, wherein the material consists of at least two material web portions (3, 4) and at least one thread (2) positioned between the material web portions (3, 4),
wherein the two material web portions (3, 4) are connected to one another at at least two connecting surfaces, wherein the thread (2) is disposed between the two connecting surfaces such that the thread (2) is connected to the material web portions (3, 4) in such a way that there is a form-locking connection between the thread (2) and the material web portions (3, 4) in a first and a second direction, wherein the two directions are oriented perpendicular to one another,
wherein the apparatus (1) comprises a sonotrode (5) having a first sealing surface (7) and a counter tool (9) having a second sealing surface (10),
wherein the counter tool (9) is cylindrical with a lateral surface and a first cylinder axis, the second sealing surface (10) is disposed on the lateral surface and is rotatable about the cylinder axis, wherein the sonotrode (5) and the counter tool (9) are disposed with respect to one another in a processing position such that the material web portions (3, 4) and the thread (2) can be guided through a gap formed by the first (7) and the second (10) sealing surface in a feed direction tangential to the lateral surface of the counter tool (9),
wherein the sonotrode (5) comprises at least one groove (8, 8', 8") for at least partially receiving the at least one thread (2), which is oriented in feed direction and preferably extends over the entire first sealing surface (7), **characterised in that** the second sealing surface (10) does not comprise a groove for partially receiving the at least one thread (2).

2. Apparatus (1) according to Claim 2, **characterised in that** the sonotrode (5) comprises a plurality of grooves (8, 8', 8"), specifically preferably more than 15 grooves (8, 8', 8"), and particularly preferably more than 50 grooves (8, 8', 8"), which are oriented in feed direction for at least partially receiving the at least one thread (2), wherein the grooves (8, 8', 8") are preferably spaced apart from one another less than 0.2 mm and most preferably between 0.01 mm and 0.15 mm.

3. Apparatus (1) according to Claim 1 or 2, **characterised in that** the at least one groove (8, 8', 8") has a depth between 0.02 and 1 mm and preferably between 0.1 and 0.5 mm.

4. Apparatus (1) according to any one of Claims 1 to 3, **characterised in that** the at least one groove (8, 8', 8") has a width between 0.02 and 1 mm and preferably between 0.1 and 0.4 mm, wherein the spacing between adjacent grooves (8, 8', 8") is preferably less than the width of the groove (8, 8', 8").

5. Apparatus (1) according to any one of Claims 1 to 4, **characterised in that** the at least one groove (8, 8', 8") has a semicircular cross-section, a U-shaped cross-section or a V-shaped cross-section.

6. Apparatus (1) according to any one of Claims 1 to 5, **characterised in that** the first sealing surface (7) comprises a weld section (15) that is substantially flat and an inlet section (17) disposed adjacent to the weld section (15), wherein the inlet section (17) is convexly curved, wherein the radius of curvature of the convexly curved inlet section (17) is preferably greater than 1 mm, particularly preferably greater than 5 mm and most preferably between 6 mm and 15 mm.

7. Apparatus (1) according to Claim 6, **characterised in that** the groove (8, 8', 8") is disposed in both the weld section (15) and the inlet section (17).

8. Apparatus (1) according to any one of Claims 1 to 7, **characterised in that** the counter tool (9) comprises at least one rib (11, 11', 11", 11‴) having at least one portion which is not oriented in circumferential direction, wherein the at least one rib (11, 11', 11", 11‴) preferably extends over the entire width of the second sealing surface (10).

9. Apparatus (1) according to Claim 8, **characterised in that** the at least one rib (11, 11', 11", 11‴) is shaped in a zig-zag or wavy manner or is linear, specifically such that the rib (11, 11', 11 ", 11‴) is not oriented parallel to the first cylinder axis.

10. Apparatus (1) according to any one of Claims 1 to 9, **characterised in that** the sonotrode (5) at least partly comprises a coating and the at least one groove (8, 8', 8") is disposed in the coating, wherein the coating preferably consists of hard metal, and particularly preferably of tungsten carbide.

11. Method for producing a gathered or gatherable material, wherein the material consists of two material web portions (3, 4) and at least one thread (2), wherein the material web portions (3, 4) are connected to one another at at least two connecting surfaces and the thread is positioned between the material web portions (3, 4) and between the connecting surfaces such that there is a form-locking connection between the thread (2) and the material web portions (3, 4) in a first and a second direction while a relative movement between the thread (2) and the material web is possible in a third direction,
wherein all three directions are oriented perpendicular to one another, **characterised in that** an apparatus (1) according to any one of Claims 1 to 10 is used and the two material web portions (3, 4) are guided through the gap together with the at least one thread (2) in feed direction while the sonotrode (5) is set in ultrasonic vibration, wherein the thread (2) is guided through the at least one groove (8, 8', 8").

12. Method according to Claim 11, **characterised in that** at least one elastic thread (2) is used, wherein the at least one elastic thread (2) is placed under tensile stress during processing.

13. Method according to Claim 11 or 12, **characterised in that** a sonotrode (5) comprising a number of grooves (8, 8', 8") greater than the number of threads (2) positioned between the material web portions (3, 4) and between the connecting surfaces is used.

## Revendications

1. Dispositif (1) permettant de fabriquer un matériau drapé ou pouvant être drapé, le matériau étant constitué d'au moins deux sections de bande de matériau (3, 4) et d'au moins un fil (2) positionné entre les sections de bande de matériau (3, 4),
les deux sections de bande de matériau (3, 4) étant reliées l'une à l'autre à au moins deux surfaces de liaison, le fil (2) étant agencé entre les deux surfaces de liaison de sorte que le fil (2) est relié aux sections de bande de matériau (3, 4) de telle manière qu'il existe une liaison à verrouillage par complémentarité de forme entre le fil (2) et les sections de bande de matériau (3, 4) dans une première et une deuxième direction, les deux directions étant orientées perpendiculairement l'une par rapport à l'autre,
le dispositif (1) comprenant une sonotrode (5) munie d'une première surface de scellage (7) et un contre-outil (9) munie d'une seconde surface de scellage (10),
le contre-outil (9) étant de forme cylindrique avec une surface enveloppante et un premier axe de cylindre, et la seconde surface de scellage (10) étant agencée sur la surface enveloppante et pouvant tourner autour de l'axe de cylindre, la sonotrode (5) et le contre-outil (9) étant, dans une position d'usinage, agencés l'un par rapport à l'autre de telle manière que les sections de bande de matériau (3, 4) et le fil (2) puissent être guidés, dans une direction d'avancée s'étendant de manière tangentielle par rapport à la surface enveloppante du contre-outil (9), à travers un interstice formé par les première (7) et seconde (10) surfaces de scellage,
la sonotrode (5) comprenant au moins une rainure (8, 8', 8") permettant d'accueillir au moins partiellement ledit au moins un fil (2), ladite rainure étant orientée dans la direction d'avancée et s'étendant de manière préférée sur la totalité de la première surface de scellage (7), **caractérisé en ce que** la seconde surface de scellage (10) ne comprend pas de rainure permettant d'accueillir partiellement ledit au moins un fil (2).

2. Dispositif (1) selon la revendication 2, **caractérisé en ce que** la sonotrode (5) comprend une pluralité de rainures (8, 8', 8'), de manière préférée plus de 15 rainures (8, 8', 8") et de manière particulièrement préférée plus de 50 rainures (8, 8', 8") permettant d'accueillir au moins partiellement ledit au moins un fil (2) et orientées dans la direction d'avancée, les rainures (8, 8', 8") étant espacées les unes par rapport aux autres de manière préférée d'une distance inférieure à 0,2 mm et de la manière la plus préférée comprise entre 0,01 mm et 0,15 mm.

3. Dispositif (1) selon la revendication 1 ou 2, **caractérisé en ce que** ladite au moins une rainure (8, 8', 8") a une profondeur comprise entre 0,02 et 1 mm et de manière préférée comprise entre 0,1 et 0,5 mm.

4. Dispositif (1) selon l'une quelconque des revendications 1 à 3, **caractérisé en ce que** ladite au moins une rainure (8, 8', 8") a une largeur comprise entre 0,02 et 1 mm et de manière préférée comprise entre 0,1 et 0,4 mm, la distance entre des rainures (8, 8', 8") voisines étant de manière préférée inférieure à la largeur de la rainure (8, 8', 8").

5. Dispositif (1) selon l'une quelconque des revendications 1 à 4, **caractérisé en ce que** ladite au moins une rainure (8, 8', 8") a une section transversale semi-circulaire, une section transversale en forme de U ou une section transversale en forme de V.

6. Dispositif (1) selon l'une quelconque des revendications 1 à 5, **caractérisé en ce que** la première surface de scellage (7) comprend une section de soudage (15) réalisée essentiellement de manière plane et une section d'entrée (17) agencée à côté de la section de soudage (15), la section d'entrée (17) étant courbée de manière convexe, le rayon de courbure de la section d'entrée (17) courbée de manière convexe étant de manière préférée supérieur à 1 mm, de manière particulièrement préférée supérieur à 5 mm et de la manière la plus préférée compris entre 6 mm et 15 mm.

7. Dispositif (1) selon la revendication 6, **caractérisé en ce que** la rainure (8, 8', 8") est agencée à la fois dans la section de soudage (15) et dans la section d'entrée (17).

8. Dispositif (1) selon l'une quelconque des revendications 1 à 7, **caractérisé en ce que** le contre-outil (9) comprend au moins une nervure (11, 11', 11", 11") ayant au moins une section qui n'est pas orientée dans la direction circonférentielle, ladite au moins une nervure (11, 11', 11", 11‴) s'étendant de manière préférée sur toute la largeur de la seconde surface de scellage (10).

9. Dispositif (1) selon la revendication 8, **caractérisé en ce que** ladite au moins une nervure (11, 11', 11", 11") est en forme de zigzag ou de vague ou est réalisée de manière linéaire, en particulier de telle manière que la nervure (11, 11', 11", 11‴) ne soit pas orientée parallèlement au premier axe de cylindre.

10. Dispositif (1) selon l'une quelconque des revendications 1 à 9, **caractérisé en ce que** la sonotrode (5) comprend au moins localement un revêtement et ladite au moins une rainure (8, 8', 8") est agencée dans le revêtement, le revêtement étant constitué de manière préférée de métal dur et de manière particulièrement préférée de carbure de tungstène.

11. Procédé de fabrication d'un matériau drapé ou pouvant être drapé, le matériau étant constitué de deux sections de bande de matériau (3, 4) et d'au moins un fil (2), les sections de bande de matériau (3, 4) étant reliées l'une à l'autre à au moins deux surfaces de liaison et le fil (2) étant positionné entre les sections de bande de matériau (3, 4) et entre les surfaces de liaison de sorte qu'il existe une liaison à verrouillage par complémentarité de forme entre le fil (2) et les sections de bande de matériau (3, 4) dans des première et deuxième directions, tandis qu'un mouvement relatif entre le fil (2) et la bande de matériau est possible dans une troisième direction,
les trois directions étant toutes orientées perpendiculairement les unes par rapport aux autres,
**caractérisé en ce qu'**un dispositif (1) selon l'une quelconque des revendications 1 à 10 est utilisé et les deux sections de bande de matériau (3, 4) sont guidées à travers l'interstice dans la direction d'avancée en même temps que ledit au moins un fil (2) tandis que la sonotrode (5) est amenée à osciller de manière ultrasonique, le fil (2) étant guidé à travers ladite au moins une rainure (8, 8', 8").

12. Procédé selon la revendication 11, **caractérisé en ce qu'**au moins un fil élastique (2) est utilisé, ledit au moins un fil élastique (2) étant mis sous tension de traction pendant l'usinage.

13. Procédé selon la revendication 11 ou 12, **caractérisé en ce qu'**une sonotrode (5) munie d'un nombre de rainures (8, 8', 8") supérieur au nombre de fils (2) positionnés entre les sections de bande de matériau (3, 4) et entre les surfaces de liaison est utilisée.
